# EUROPEAN PATENT SPECIFICATION

(11) **EP 0 761 755 B1**
(45) Date of publication and mention of the grant of the patent: **07.04.1999**
(21) Application number: 96201895.8
(22) Date of filing: 08.07.1996
(51) Int. Cl.: C08L 23/28, C09K 21/14, C08K 11/00

(54) **Moldable intumescent thermoplastic compositions**
Verformbare thermoplastische Intumeszenzmassen
Compositions thermoplastiques intumescentes moulables

(30) Priority: 21.08.1995 US 515083
(43) Date of publication of application: 12.03.1997
(73) Proprietor: GENERAL MOTORS CORPORATION, Detroit Michigan 48202 (US)
(72) Inventor: Abu-Isa, Ismat Ali, Rochester Hills, Michigan 48309 (US); Jaynes, Craig Bryant, Bloomfield Hills, Michigan 48302 (US)
(74) Representative: Manitz, Finsterwald & Partner

(56) References cited:
- EP-A- 0 111 287
- EP-A- 0 167 084
- DD-A- 153 210
- FR-A- 2 328 029
- US-A- 4 129 535
- DATABASE WPI Week 8927 Derwent Publications Ltd., London, GB; AN 89-195718 XP002019067 & JP-A-01 132 685 (MITSUBISHI CABLE IND)
- DATABASE WPI Week 7818 Derwent Publications Ltd., London, GB; AN 78-32999a XP002019068 & JP-A-53 031 752 (SHOWA ELEC WIRE)

## Description

### Technical Field

This invention relates to moldable intumescent thermoplastic compositions that have certain minimal physical properties and an intumescent efficiency as determined by tests described in the specification such that the moldable compositions are useful over a wide range of ambient temperatures and hydrocarbon-containing environments and the like.

### Background of the Invention

Intumescent paints have been devised for use on wall surfaces of buildings, ships or other structures or vessels intended for human occupancy and which are susceptible to fires. Intumescent coatings contain ingredients which will react on severe heating to generate gases and form an incombustible or low combustible residue. The expelled gases expand the residue into a thin foam layer with thermal insulating properties. The foam produced from the coating must be tough and adherent so as to resist violent drafts and thermal expansion forces arising from the fire. In many instances, the residue is a carbon char which is formed by the dehydration of a polyhydric substance such as a polyalcohol. The reactions all take place within the coating so when the coating film is heated to beyond a specific elevated temperature, an intumescent additive such as the polyhydric alcohol is decomposed, generating water, carbon dioxide, ammonia and/or other heat absorbing gases that do not readily support combustion.

While intumescent coatings have been available, they are not always easy to apply where needed and they can serve no purpose other than as a coating. It would be desirable to provide a group of moldable thermoplastic compositions having intumescent properties. Such moldable thermoplastic compositions could be shaped into any desired configuration at a suitable manufacturing location and serve a useful purpose such as a structural member, a shelf or other storage member, or a sound-deadening or other barrier member in addition to providing an intumescent barrier in the event of a fire. Heretofore, such moldable intumescent thermoplastic compositions have not been available, especially compositions possessing suitable physical properties over a range of ambient temperatures such as might be experienced in a ship or an automobile or the like.

### Summary of the Invention

This invention comprises a family of new thermoplastic molding compositions that provide intumescent properties to moldings formed from them. Moreover, moldings produced from the compositions suitably have at least certain minimal physical properties such as a tensile strength of 2.7 MPa (400 psi) and an elongation at break of at least 50 percent at normal room temperature (ASTM D412). Such properties give moldings sufficient strength and durability so as to be useful in architectural applications, automotive applications, marine applications or the like. In addition to having useful physical properties for such applications, the moldings also have "intumescence efficiency." When exposed to elevated temperatures, the intumescent additives react or decompose to convert the molded plastic body to a residual insulating foam-like structure that is resistant to burning and insulates the back side of the molding from the high temperatures of the combustion flame.

Suitable constituents of the subject intumescent thermoplastic molding compositions comprise a moldable chlorinated polymer material which may be solely a suitable chlorinated polyethylene elastomer or a mixture of such elastomer(s) with one or more thermoplastic polymers such as polyvinyl chloride and/or high density polyethylene. Usually the chlorinated polyethylene elastomer will constitute more than 25 percent of the elastomer resin/thermoplastic resin mixture, and as stated, the chlorinated polyethylene may be the sole polymeric constituent of the molding material.

A second constituent of the moldable intumescent material is a heat stabilizer which protects the molding compositions against thermal degradation during formulation and molding and further contributes to the ability of the compositions to resist ignition and heat transfer at high temperatures. Suitably, the heat stabilizer additive(s) will constitute about 5 to 15 percent by weight of the total of the chlorinated polymer mixture plus heat stabilizer. Examples of suitable heat stabilizers are magnesium oxide, hydroquinone derivatives, organic phosphite heat stabilizers such as tetraphenyl dipropylene glycol diphosphate (THOP, a product of General Electric Specialty Chemicals), hindered phenols such as the Irganox group of known heat stabilizers supplied by Ciba-Geigy Company, e.g., tetrakis [methylene-3-(3',5'-di-t butyl-4'-hydroxyphenyl) propionate] methane, amine antioxidants and thio esters such as distearylthiodipropanate (DSTDP).

A third essential ingredient of the moldable chlorinated polymer formulation of this invention is, of course, the intumescent additives. Such additives are frequently used in combination so as to provide a variety of volatile heat-consuming and foam-forming gaseous emissions. Examples of suitable intumescent additives include antimony trioxide, ammonium dihydrogen phosphate, corn starch, hydrated alumina and like materials with a plurality of hydroxyl groups. Examples of other polyhydroxy intumescent materials include sugars (carbohydrates), tetrahydroxy compounds such as pentaerythritol and trihydroxy compounds such as trimethylol propane. Suitably, the intumescent additive(s) make up about 25 to 40 percent by weight of the total weight of chlorinated polymer mixture and intumescent additives.

While a variety of the heat stabilizers and intumescent additives are known from other technologies such as the intumescent coating technology or conventional thermoplastic molding technology, the selection of the specific additives employed in each instance will be such as to be compatible with the chlorinated polymer materials employed to provide the physical properties and intumescent efficiency properties of the subject molding compounds.

In addition to the above essential ingredients, plasticizers may be incorporated in the material to provide low temperature impact resistance and flexibility importing properties. Also, reinforcing materials such as 3/16-inch glass fibers or the like may be employed to provide higher tensile strength and other physical properties of such reinforced composites. However, in accordance with this invention, the essential ingredients and any additional ingredients are balanced in the overall formulation to provide thermoplastic moldings having a minimal tensile strength of 2.7 megapascals (MPa, or about 400 pounds force per square inch) and a minimum elongation at break of 50 percent in combination with an Intumescence Efficiency of no more than 450°C as determined hereinbelow.

Further advantages of the invention will be more apparent from a detailed description thereof which follows. Reference will be had to the drawings.

### Brief Description of the Drawings

Figure 1 is a perspective view of apparatus for measuring the efficiency of intumescent moldable compositions in accordance with this invention.

Figure 2 is a graph depicting temperature versus time at different locations of a steel plate protected by a molded intumescent composition in accordance with the invention.

Figure 3 is a graph of stress versus strain of a formulation prepared in accordance with the invention.

Figure 4 is a graph depicting a thermogravimetric analysis of an intumescent material prepared in accordance with the invention.

### Description of an Embodiment of the Invention

This invention provides intumescent thermoplastic molding compositions that can be blow molded, injection molded, compression molded or otherwise suitably molded and shaped to a desired geometry or configuration by thermal processes. The molded part may be intended to serve primarily as a heat or fire barrier. More often, it will also serve another purpose and serve incidentally as a heat or fire barrier. In either case, the invention provides a moldable material that can be formed in a suitable manufacturing facility and transported for efficient handling at an automobile assembly line or at a construction site or the like. Thus, the subject composition facilitates efficient manufacture and assembly and provides robust physical and fire-resistant properties in use.

The polymeric constituent of this invention includes a chlorinated polyethylene elastomer(s) or a thermoplastic elastomer mixture composed of chlorinated polyethylene as the soft elastomeric phase and one or both thermoplastic polymeric resins selected from the group consisting of polyvinyl chloride and high density polyethylene as the included and distributed hard phase. The elastomer portion of the composition can be used with or without a small amount of crosslinking agent provided that the overall composition can be processed thermoplastically. The essential ingredients of the formulation include such thermoplastic elastomer mixture or chlorinated polyethylene elastomer alone, together with a suitable heat stabilizer composition and content as well as suitable intumescence and fire resistance additives and content. The identity of suitable heat stabilizers has been summarized above, as has the identity of a small number of suitable intumescent and fire resistance providing additives. The usage of these materials will be further illustrated in the specific examples which follow.

In addition to the essential polymer content and heat stabilizer and intumescence additives, certain other materials are suitable optional constituents. Glass fiber or other fibrous or particulate reinforcing material may be employed to increase mechanical and thermal properties of the molded composition when an application requires such properties. In addition, there will be product applications such as those for low temperature usage in which plasticizers may be incorporated into the moldable compositions. In general, two types of plasticizers have been demonstrated to achieve good low temperature properties. They include liquid chlorowax-type plasticizers and the liquid organic phosphate or ester-type plasticizers. Again, specific examples of these materials will be illustrated in the examples that follow.

The following Table 1 summarizes eight specific compositions of chlorinated polyethylene (CPE, Tyrin 4211P) and mixtures of this CPE with polyvinyl chloride PVC (Geon 179). Tyrin 4211P is a trademark of the Dow Chemical Company. This resin contains 42 percent by weight chlorine, has an ultimate elongation (ASTM D412) of 500 percent, a tensile strength (ASTM D412) of 126.7 kg/cm² (1800 psi) and a 100 percent modulus (ASTM D412) of 17.6 kg/cm² (250 psi). Other CPE elastomeric resins may be used. It is preferred that they have a chlorine content of about 36 to 42 percent and that they have comparable physical properties. Geon 179 is a trademark of the Geon Company, and this unplasticized powdered resin is characterized by a small average particle size of 0.56 to 1.6 microns and a low gel temperature of 66°C to 96°C. Such small particle size PVC is preferred because it readily incorporates a plasticizer when one is employed.

The values in Table 1 opposite each ingredient are parts by weight, and the numbers for each composition total 100.

**TABLE 1**

| Ingredients | Compositions | | | | | | | |
|---|---|---|---|---|---|---|---|---|
| | 1 | 2 | 3 | 4 | 5 | 6 | 7 | 8 |
| Chlorinated Polyethylene CPE (Tyrin 4211P) | 60 | 57 | 40 | 40 | 31 | 37 | 33 | 33 |
| Polyvinyl Chloride PVC (Geon 179) | -- | 14 | 31 | 30 | 23 | 27 | 25 | 25 |
| Chlorowax 70S | 6 | -- | -- | -- | -- | -- | -- | -- |
| Magnesium Oxide | 8 | 4 | 4 | 4 | 3 | 4 | 3 | 3 |
| THOP Phosphite | 1 | -- | -- | 1 | 1 | 1 | 1 | 1 |
| Irganox 1010 Antioxidant | 1 | 1 | 1 | 1 | 1 | 1 | 1 | 1 |
| Antimony Trioxide | 8 | 8 | 8 | 8 | 6 | 7 | 7 | 7 |
| Ammonium Dihydrogen Phosphate | 9 | 9 | 9 | 9 | 7 | 8 | 8 | 8 |
| Corn Starch | 7 | 7 | 7 | 7 | 5 | 6 | 6 | 6 |
| 3/16 Chopped Glass (183G) | -- | -- | -- | -- | 23 | 9 | 8 | -- |
| Hydrated Alumina | -- | -- | -- | -- | -- | -- | 8 | 16 |
| Intumescence Efficiency, °C | 425 | 292 | 282 | 353 | 353 | 309 | 301 | 329 |

The above eight compositions were prepared, mixed and molded and tested for certain physical and intumescence properties as follows.

### Mixing of the Compositions

The mixing of compositions described herein on a laboratory scale was achieved by different methods including mixing on a two-roll mill heated to 65°C. The polymeric resin or resins and the stabilizers were added to the rolls and shear mixed for about five minutes. At that time good mixing was visually observed and the material was banded on one of the rolls. The actual temperature of the resin during mixing approached 150°C due to shearing of the mixture. The ingredients for intumescence were added next. They were added in a fine powder form and mixed well with the resin. In compositions 5, 6 and 7, glass fibers were then added and mixed into the formulation for about three minutes. The total mixing time of each compound was about 15 minutes.

In alternative practices, formulations were also prepared by mixing in a Brabender bowl, which is a small internal mixer, and in a large Banbury internal mixer. In these practices, for example, the Banbury cavity is preheated to 93°C. Then, a first batch of ingredients is added to the bowl. These ingredients include (for example) chlorinated polyethylene and polyethylene, magnesium oxide, hydrated alumina, DSTDP, antimony oxide, corn starch and chlorowax. The mixing speed of the bowl was then increased to 120 rpm, and the ingredients were allowed to mix for two to three minutes. In this example utilizing polyethylene, the temperature of the mix was permitted to rise above about 120°C to melt the polyethylene and incorporate it into the mixture but not permitted to rise above 140°C to ensure that the products did not undergo degradation. Following this first mixing operation, a second batch of ingredients which include, for example, ammonium dihydrogen phosphate, melamine and glass were added to the bowl, mixing was continued for three more minutes or until the temperature reached about 160°C, whichever first occurred. The mix was then removed from the bowl and dumped onto a mill to further mix and sheet out the composition. The temperature of the mill in the case of this example was about 132°C.

Another example of resin composition mixing that is suitable with the subject moldable compositions involves a Brabender extruder. The effect of temperature and shear rate has been investigated with this extruding device. The temperatures of the three extruder barrel zones and the die were all varied between 150°C and 175°C. Three settings of the screw speeds were investigated, namely 50, 75 and 100 rpm. The length-to-diameter ratio of the screw was 20 to 1, and the compression ratio was 1. The material extruded well and exhibited good mixing at all of the above conditions. Large scale batches were prepared using a twin screw Buss kneader.

### Molding Example

Portions of each of the above mixed compositions 1 through 8 from Table 1 were prepared in the form of molded slabs using compression molds and a heated press. The slabs were square (152 mm by 152 mm) and were molded with thicknesses in the range of 0.2 mm to 2.75 mm. Other types of thermoplastic molding operations such as injection molding, vacuum forming and blow molding may also be utilized to prepare suitable molded structures in accordance with this invention.

### Intumescent Test Apparatus

All of the moldable compositions illustrated in this specification have been tested as intumescent compositions to be used for resisting the spread of a flame from a fire source and curtailing temperature rise. The characteristic or property of Intumescence Efficiency as ascribed to moldings from the subject compositions were determined in an apparatus and by a practice as follows. When reference is made to such property in this specification or claims, it is intended that the property be determined utilizing such an apparatus or the equivalent and such practices.

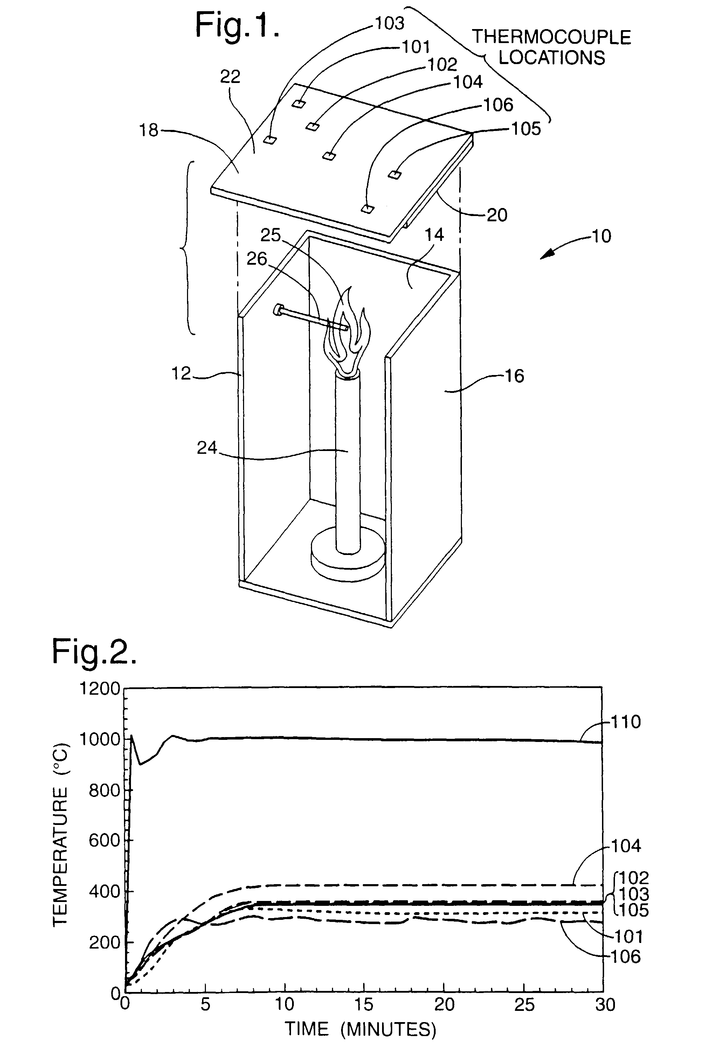

The Intumescence Efficiency test apparatus is shown in Figure 1. Apparatus 10 included a three-wall steel chamber comprising left side wall 12, back wall 14 and right side wall 16. Each wall was a steel plate 229 mm high, 127 mm wide and 1 mm thick. The plates were joined at their edges as shown in Figure 1 to form a generally square-shaped (in cross section) chamber with an open front.

A 152 mm by 152 mm by 1 mm thick steel plate adapted to be placed on top of walls 12, 14 and 16 was employed as a roof member 18. During a test, the roof member 18 carried affixed to its lower surface a molded 127 mm x 152 mm x 2.75 mm rectangular molded slab 20 of material to be tested for Intumescence Efficiency. Note that the thickness of 2.75 mm of the test specimen (as well as its composition) is important to the repeatability of this test. As shown, the intumescent slab 20 faces downward inside of the roof 18 and chamber during the test. On the top surface 22 of the steel roof panel 18 were located six thermocouple leads in the locations indicated, respectively 101, 102, 103, 104, 105 and 106.

A 165 mm tall Bunsen burner 24 was used as the flame source. The height of the burner did not include the flame height. The flame height was of the order of 60 mm, and it was adjusted during each test so that the tip of the inner blue cone of the flame 25, its hottest part, touched the surface of the intumescent material. A thermocouple indicated at 26 was placed at the lower surface of the intumescent coating 20 to measure the flame temperature as it impinged on the intumescent material at that point. The flame temperature as measured by thermocouple 26 was at a location on the intumescent material opposite the location of thermocouple 104 on the top surface 22 of the steel roof member 18.

While six thermocouple locations as indicated in Figure 1 were initially used in testing of intumescence efficiency, experience has shown that equivalent useful data is obtained from using only four thermocouples at locations 101, 102, 104 and 106.

### Evaluation of the Formulations

A molded slab of formulation 1 (referring to Table 1) was exposed to the flame of the Bunsen burner in the test apparatus 10. Figure 2 is a graph of temperature (in degrees Celsius) versus time (in minutes) of the thermocouple measured temperatures at locations 101-106 on the top surface 22 of steel plate 24 protected by intumescent material 20 of formulation 1. The curve for the flame temperature in Figure 2 is designated 110. The curves for the other thermocouple readings in Figure 2 are designated with the number of their thermocouple location.

The flame temperature shot up to over 1000°C within one-half minute and then decreased somewhat as the cooling effect of the gas evolution of the intumescent material in formulation 1 was seen in the flame temperature. However, after a period of about four minutes, the flame temperature again levelled off at 1000°C. The molded formulation 1 slab, which was based on CPE resin, displayed no sign of dripping or burning when exposed to the direct flame and heated drastically. The sample was heated for 30 minutes. It charred and swelled to a thickness greater than its original thickness when it was exposed to the flame. It is seen that as the respective thermocouples reach an equilibrium temperature, thermocouple 104 consistently recorded the highest temperature. This maximum temperature was 425°C. Thermocouple locations 101 and 106 were the lowest temperatures, while the plotted temperatures for thermocouple locations 102, 103 and 105 were so close as to be virtually indistinguishable. The highest temperature recorded on the top side of the steel roof of apparatus 10 is taken as the "Intumescence Efficiency" for its formulation 1 molded slab. This temperature, i.e. the Intumescence Efficiency, as noted above was 425°C.

In general, it is observed that unless the test material ignites, the maximum temperature that is recorded by a thermocouple on the roof member of the test apparatus is at location 104 because that location is immediately above the flame of the Bunsen burner.

Each of the other formulations described in this specification were tested as molded slabs of the same dimensions in the same test apparatus and by the 30-minute flame heating practice identical to that described above. Recordings of flame temperature and thermocouple temperatures were made similar to that depicted in Figure 2 with respect to the composition 1 molded slab. While the closeness or the spread of the thermocouple temperatures varied from test to test, in each instance the maximum temperature following the decomposition of the intumescent additives in the molding was taken as the measure of Intumescence Efficiency. The highest temperature, in degrees Celsius, is reported as Intumescence Efficiency for each of compositions 1 through 8 in Table 1.

Composition 2 was the first of the formulations illustrated that contained polyvinyl chloride in combination with chlorinated polyethylene. When this formulation was subjected to the intumescence efficiency test in apparatus 10, it did not drip or ignite. Again, the slab sample simply charred and swelled into an insulating blanket as expected for a suitable intumescent material when it was exposed to the flame. However, in this instance, the maximum temperature measured on the steel roof during the 30 minute test was only 291°C. Hence, this composition is more effective in terms of Intumescent Efficiency than composition 1. Compositions 3 and 4 are like composition 2 but with higher concentrations of polyvinyl chloride. Addition of higher concentrations of polyvinyl chloride leads to higher modulus and better handling characteristics in the mixing and the preparation of the product. Glass fiber was introduced in formulations 5 and 6. The fibrous glass reinforcement gives these formulations higher stiffness, and the Intumescence Efficiency testing showed that the presence of glass in the material did not diminish its effectiveness as an intumescent material.

All of the compositions 1 through 8 were exposed to the Bunsen burner flame for 45 minutes even though the test was viewed as completed at 30 minutes. In each composition sample, initial burning and charring of the resin component was observed but the samples did not sustain combustion. Each sample expanded to form an insulating blanket having a thickness larger than that of the original molding. In the intumescent condition, they maintained their shape well and surprisingly exhibited strength and some structural integrity. In other words, they did not crumble or flake off the roof member 18 of apparatus 10. They formed a ceramic blanket which upon analysis is found to consist of glass, carbon, phosphorus, alumina and magnesia.

Samples with lower glass concentrations appeared to perform better in terms of thermal insulation.

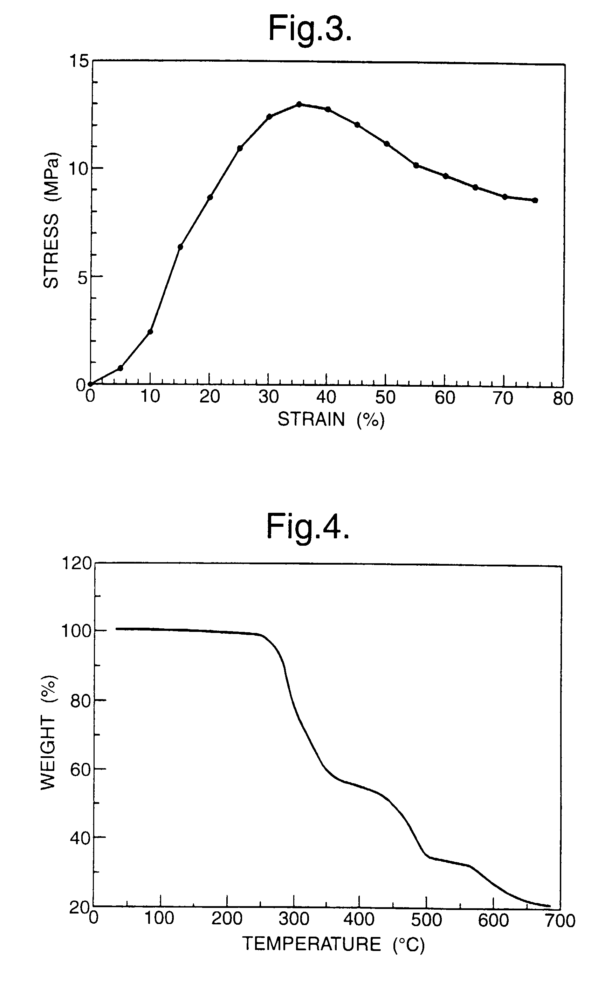

A number of molded test specimens of the formulation containing fiberglass and hydrated alumina (composition 7 of Table 1) were used to produce the following data. An average stress/strain curve of five samples of glass fiber-filled composition 7 is shown in Figure 3. The ultimate tensile strength is 13 MPa, and the ultimate elongation is 75 percent as measured per ASTM D638. The die C tear strength of the material was measured per ASTM D624 and found to have an average value of 48 kN/M. The flexural modulus was measured per ASTM D790 and found to be 460 MPa. All measurements were conducted at room temperature.

The effect of temperature on the molded composition 7 is illustrated using thermogravimetric analysis (TGA). The TGA data in air for composition 7 is depicted in Figure 4. It shows that no appreciable degradation of the intumescent molded slab occurs below 200°C.

### Solvent Resistance of Formulation 1

In automotive applications and in other applications where the molded compositions of this invention are exposed to a range of solvents, it is important to know the resistance of the coating to such materials. The results of the effect of different automotive fluids on the degree of swell and tear strength of molded specimens of composition 1 are shown in Table 2. The percentage swell in water, windshield fluid, salt water and coolant were all less than one percent, whereas the swell in transmission fluid was 1.2 percent and in brake fluid 2.3 percent. The tear strength results of all samples after exposure to the fluids for at least four hours at room temperature were all within six percent of tear strength value of the unexposed control sample.

**TABLE 2**

| Automotive Fluid Resistance of Intumescent Coating (Composition 1 of Table 1) | | |
|---|---|---|
| Fluid | % Swell | Tear Strength (kN/M) |
| None | -- | 32.7 |
| Water | 0.49 | 32.7 |
| Salt Water | 0.22 | 34.8 |
| Transmission Fluid | 1.20 | 31.9 |
| Windshield Fluid | -0.16 | 31.7 |
| Brake Fluid | 2.30 | 33.5 |
| Coolant | -0.12 | 32.7 |

### Plasticizer Additions

The above-described eight illustrative compositions of this invention were essentially unplasticized. In order to increase the utility of the subject moldable intumescent compositions to a wider range of applications and of processing methods, the influence of plasticizers on the properties of the basic compositions were investigated. The plasticizers investigated were isodecyl diphenyl phosphate (Santicizer 141, a trademark of Monsanto Company), 2 ethylhexyl diphenyl phosphate (Santicizer 148, Monsanto), butylbenzyl phthalate (Santicizer 170, Monsanto), and chlorowax (Pariol 145, Dover Chemical Corporation). These plasticizers were mixed with chlorinated polyethylene, CPE (Tyrin 4211P) and polyvinyl chloride, PVC (Geon 179) in accordance with mixing practices like those described above. A summary of four such compositions (compositions 9 through 12) is found in Table 3 below, together with some of the properties of these compositions including their intumescence efficiency, glass transition temperature and tensile strength. For each comparison with a similar composition without plasticizer, a control composition, which is composition 7 from Table 1, is included in Table 3.

**TABLE 3**

| Formulations | 9 | 10 | 11 | 12 | Control (#7) |
|---|---|---|---|---|---|
| Chlorinated Polyethylene, CPE (Tyrin 4211P) | 28.6 | 39.3 | 39.3 | 39.3 | 33 |
| Polyvinyl Chloride, PVC (Geon 179) | 21.4 | 17.9 | 17.9 | 17.9 | 25 |
| Santicizer 148 | 14.3 | 7.1 | -- | -- | |
| Santicizer 141 | -- | -- | 7.1 | -- | |
| Santicizer 160 | -- | -- | -- | 7.1 | |
| Antimony Trioxide | 5.7 | 5.7 | 5.7 | 5.7 | 7 |
| Ammonium Polyphosphate (Phos-Chek P/40) | 6.4 | 6.4 | 6.4 | 6.4 | 8 |
| THOP Phosphite | 0.7 | 0.7 | 0.7 | 0.7 | 1 |
| Magnesium Oxide | 2.9 | 2.9 | 2.9 | 2.9 | 3 |
| Distearylthiodipropionate Antioxidant (DSTDP) | 0.7 | 0.7 | 0.7 | 0.7 | -- |
| Irganox 1010 Antioxidant | -- | -- | -- | -- | 1 |
| Corn Starch | 5.0 | 5.0 | 5.0 | 5.0 | 6 |
| Hydrated Alumina | 7.1 | 7.1 | 7.1 | 7.1 | 8 |
| 3/16" Glass Fiber | 7.1 | 7.1 | 7.1 | 7.1 | 8 |

| Properties | | | | | |
|---|---|---|---|---|---|
| Intumescence Efficiency (Highest Temperature °C) | 320 | 325 | 342 | 351 | 301 |
| Glass Transition (Tg °C) (Dynamic Measurement) | 9 | 21 | 17 | 16 | 24 |
| Tensile Strength (MPa) | 2.25 | 2.94 | 3.29 | 2.80 | 13.0 |
| Elongation at Break (%) | 348 | 295 | 309 | 370 | 75 |
| Tear Strength (kN/m) | 21.1 | 26.1 | 25.6 | 23.6 | 49.0 |

As seen in the summary of properties included in the above Table 3, the addition of the respective plasticizer materials lowered the glass transition temperature as measured by a dynamic mechanical analyzer (DMA) from 24°C for the unplasticized control composition 7 to 9°C to 21°C for the plasticized samples. The incorporation of the plasticizer contributed to an improvement in the ultimate elongation of samples 9 through 12 to values of 295 percent to 370 percent as compared with 75 percent ultimate elongation for the control sample. Improvements of this type in elongation can enable a particular part of the formulation to be made by vacuum forming or deep drawing. They also may provide improved impact resistance if that is required for a part application. On the other hand, as was expected, the incorporation of the plasticizers lowered the tensile strength of the compositions as compared to the control sample.

However, all of the plasticized samples 9 through 12 provided adequate protection against fire as measured by the intumescence efficiency procedure described above. The maximum temperatures for the plasticized samples were between 320°C and 351°C as compared to 301°C for the control sample.

It is recognized that molding compositions such as the subject materials must serve many different applications and situations and therefore must be capable of being formulated to provide a wide range of properties from the formulation family. In order to provide improvements in tensile strength while maintaining good low temperature properties, molding compositions may be employed in which the polyvinyl chloride hard polymer segment is replaced with other thermoplastic polymeric resins. Summarized in Table 4 below is composition 13 in which high density polyethylene (HXM50100, extrusion grade), a trademark of Phillips 66 Plastics, was included. The other constituents of the formulation are listed in Table 4 with the composition values in terms of parts or percentage by weight. Also included in Table 4 is the Intumescence Efficiency value measured on the molded slab of the composition and other relevant physical properties of the molded material. The high density polyethylene (HDPE), HXM 50100, is an example of an extrusion grade HDPE suitable for use in this invention. Phillips HMN 4550 is an example of a suitable injection molding grade HDPE for use in this invention.

**TABLE 4**

| Formulations | 13 |
|---|---|
| Chlorinated Polyethylene, CPE (Tyrin 4211P) | 33 |
| High Density Polyethylene (HXM50100) | 15.5 |
| Chlorowax (Paroil 145) | 8 |
| Ammonium Dihydrogen Phosphate | 16 |
| Antimony Trioxide | 4 |
| DSTDP Antioxidant | 0.5 |
| Magnesium Oxide | 4 |
| Hydrated Aluminum Oxide | 5 |
| 3/16" Glass | 8 |
| Corn Starch | 3 |
| Melamine | 3 |

| Properties | |
|---|---|
| Intumescence Efficiency (Highest Temperature °C) | 314 |
| Glass Transition (Tg °C) | 11 |
| Tensile Strength (MPa) | 7.4 |
| Elongation at Break (%) | 474 |
| Tear Strength (kN/m) | 45 |

It is seen that composition 13 displayed a good Intumescence Efficiency of 314°C. This composition based on polyethylene demonstrated good low temperature behavior as well as high ultimate elongation.

In general, it is seen that a family of very useful moldable intumescent thermoplastic compositions can be based on chlorinated polyethylene and mixtures of chlorinated polyethylene with one or more of polyvinyl chloride and/or high density polyethylene. Each formulation contains suitable amounts of an intumescent additive and heat stabilizer along with optional additions of plasticizers, fillers, reinforcing agents and the like. In general, it is preferred that the amount of intumescent additive be in the range of about 25 to 40 percent by weight of the sum of the intumescent additive and the chlorinated polymer material. In general, it is also preferred that the amount of heat stabilizer lie in the range of about 5 to 15 percent by weight of the total of the heat stabilizer and chlorinated polymer material.

Because of their combination of good physical and intumescent properties, the subject moldings have utility as structural members, sound deadeners, heat barriers and other liner members over a broad range of temperatures.

While this invention has been described in terms of a preferred embodiment thereof, it will be appreciated that other forms could readily be adapted by one skilled in the art. Accordingly, the scope of this invention is to be considered limited only by the following claims.

## Claims

1. An intumescent thermoplastic elastomer molding which is the molded product of a blended mixture initially comprising:
(a) a moldable thermoplastic elastomer chlorinated polymer selected from the group consisting of chlorinated polyethylene elastomer and mixtures of 25 percent by weight or more of chlorinated polyethylene elastomer with at least one of polyvinyl chloride and high density polyethylene;
(b) a heat stabilizer for the thermoplastic chlorinated polymer material; and
(c) intumescent and fire-resistant additives for the chlorinated polymer material comprising,
(i) at least one constituent selected from the group consisting of hydrated alumina, hydrated magnesia and melamine; and
(ii) at least one constituent selected from the group consisting of carbohydrates, trihydroxy alcohols and tetrahydroxy alcohols; and
(iii) at least one constituent selected from the group consisting of ammonium dihydrogen phosphate and ammonium polyphosphates;
said intumescent thermoplastic molding displaying a minimum tensile strength of 2.7 MPa (400 psi), a minimum elongation at break of 50 percent, and an Intumescence Efficiency of 450°C maximum as determined by the intumescent test procedure of this specification.

2. An intumescent thermoplastic molding as recited in claim 1 in which the intumescent additive is present in the blended mixture in an amount of about 25 percent by weight to 40 percent by weight of the total of intumescent additive and moldable chlorinated polymer.

3. An intumescent thermoplastic molding as recited in claim 1 in which the heat stabilizer is present in the blended mixture in an amount of about 5 to 15 percent by weight of the total of heat stabilizer and moldable chlorinated polymer.

4. An intumescent thermoplastic molding as recited in claim 1 in which the heat stabilizer is one or more materials selected from the group consisting of magnesium oxide, organic phosphite heat stabilizers, thio esters, hindered phenols, amine antioxidants and hydroquinone derivatirves.

5. An intumescent thermoplastic molding as claimed in Claim 1, wherein the moldable thermoplastic elastomer chlorinated polymer mixture consists essentially of 25 to 74 percent by weight chlorinated polyethylene elastomer with the balance being at least one of polyvinyl chloride and high density polyethylene; wherein the heat stabilizer is present in the blended mixture in an amount of about 5 to 15 percent by weight of the total of heat stabilizer and moldable chlorinated polymer mixture; and wherein the intumescent additive is present in the blended mixture in an amount of about 25 to 40 percent by weight of the total of the intumescent additive and moldable chlorinated polymer mixture.

6. An intumescent thermoplastic molding as claimed in Claim 5, wherein the moldable thermoplastic elastomer chlorinated polymer mixture is a moldable thermoplastic chlorinated polyethylene elastomer.

## Patentansprüche

1. Intumeszentes, thermoplastisches, elastomeres Formteil, welches das geformte Produkt aus einer vermengten Mischung ist, welche zu Beginn umfaßt:
(a) ein formbares, thermoplastisches, elastomeres, chloriertes Polymer, das aus der Gruppe ausgewählt ist, die aus chloriertem Polyethylenelastomer und Mischungen von 25 Gewichtsprozent oder mehr chloriertem Polyethylenelastomer mit mindestens einem von Polyvinylchlorid und Polyethylen hoher Dichte besteht;
(b) einen Wärmestabilisator für das thermoplastische, chlorierte Polymermaterial; und
(c) intumeszente und feuerfeste Zusätze für das chlorierte Polymermaterial, umfassend
(i) mindestens einen Bestandteil, der aus der Gruppe ausgewählt ist, die aus hydratisiertem Aluminiumoxid, hydratisiertem Magnesiumoxid und Melamin besteht; und
(ii) mindestens einen Bestandteil, der aus der Gruppe ausgewählt ist, die aus Kohlenhydraten, Trihydroxyalkoholen und Tetrahydroxyalkoholen besteht; und
(iii) mindestens einen Bestandteil, der aus der Gruppe ausgewählt ist, die aus Ammoniumdihydrogenphosphat und Ammoniumpolyphosphaten besteht;
wobei das thermoplastische Intumeszenzformteil eine minimale Zugfestigkeit von 2,7 MPa (400 psi), eine minimale Bruchdehnung von 50 Prozent und eine Intumeszenzwirksamkeit von 450°C maximal zeigt, wie durch das Intumeszenzversuchsverfahren dieser Beschreibung bestimmt.

2. Intumeszentes, thermoplastisches Formteil nach Anspruch 1, bei dem der Intumeszenzzusatz in der vermengten Mischung in einer Menge von ungefähr 25 Gewichtsprozent bis 40 Gewichtsprozent der Summe aus dem Intumeszenzzusatz und dem formbaren chlorierten Polymer vorhanden ist.

3. Intumeszentes, thermoplastisches Formteil nach Anspruch 1, bei dem der Wärmestabilisator in der vermengten Mischung in einer Menge von ungefähr 5 bis 15 Gewichtsprozent der Summe aus dem Wärmestabilisator und dem formbaren chlorierten Polymer vorhanden ist.

4. Intumeszentes, thermoplastisches Formteil nach Anspruch 1, bei dem der Wärmestabilisator ein oder mehrere Materialien ist, die aus der Gruppe ausgewählt sind, die aus Magnesiumoxid, organischen Phosphitwärmestabilisatoren, Thioestern, sterisch gehinderten Phenolen, Aminantioxidationsmitteln und Hydrochinonderivaten besteht.

5. Intumeszentes, thermoplastisches Formteil nach Anspruch 1, wobei die formbare, thermoplastische, elastomere, chlorierte Polymermischung im wesentlichen aus 25 bis 74 Gewichtsprozent chloriertem Polyethylenelastomer besteht, wobei der Rest mindestens eines von Polyvinylchlorid und Polyethylen hoher Dichte ist; wobei der Wärmestabilisator in der vermengten Mischung in einer Menge von ungefähr 5 bis 15 Gewichtsprozent der Summe aus dem Wärmestabilisator und der formbaren chlorierten Polymermischung vorhanden ist; und wobei der Intumeszenzzusatz in der vermengten Mischung in einer Menge von ungefähr 25 bis 40 Gewichtsprozent der Summe aus dem Intumeszenzzusatz und der formbaren chlorierten Polymermischung vorhanden ist.

6. Intumeszentes, thermoplastisches Formteil nach Anspruch 5, wobei die formbare, thermoplastische, elastomere, chlorierte Polymermischung ein formbares thermoplastisches chloriertes Polyethylenelastomer ist.

## Revendications

1. Moulage élastomère thermoplastique intumescent qui est le produit moulé d'une préparation mélangée comprenant à l'origine :
(a) un polymère chloré thermoplastique élastomère moulable choisi dans le groupe comprenant un élastomère de polyéthylène chloré et des mélanges de 25% en poids ou plus d'élastomère de polyéthylène chloré avec au moins un constituant de poly(chlorure de vinyle) et de polyéthylène à haute densité;
(b) un stabilisant à la chaleur pour le matériau polymère chloré thermoplastique, et
(c) des additifs intumescents et résistant au feu pour le matériau polymère chloré comprenant,
(i) au moins un constituant choisi dans le groupe comprenant de l'alumine hydratée, de la magnésie hydratée et de la mélamine,
(ii) au moins un constituant choisi dans le groupe comprenant des carbohydrates, des alcools trihydroxylés et des alcools tétrahydroxylés, et
(iii) au moins un constituant choisi dans le groupe comprenant du phosphate diacide d'ammonium et des polyphosphates d'ammonium ;
ledit moulage thermoplastique intumescent affichant une résistance à la traction minimale de 2,7 Mpa (400 psi), un allongement à la rupture minimal de 50% et un taux d'intumescence de 450°C maximum tel qu'il a est déterminé par le procédé d'essai d'intumescence de la présente demande.

2. Moulage thermoplastique intumescent selon la revendication 1. dans lequel l'additif intumescent est présent dans la préparation mélangée dans une proportion d'environ 25 à 40% en poids du total de l'additif intumescent et du polymère chloré moulable.

3. Moulage thermoplastique intumescent selon la revendication 1. dans lequel le stabilisant à la chaleur est présent dans la préparation mélangée dans une proportion d'environ 5 à 15% en poids du total du stabilisant à la chaleur et du polymère chloré moulable.

4. Moulage thermoplastique intumescent selon la revendication 1, dans lequel le stabilisant à la chaleur est un ou plusieurs matériau(x) choisi(s) dans le groupe comprenant l'oxyde de magnésium, des stabilisants à la chaleur de type phosphite organique, des thio-esters, des phénols empêchés, des antioxydants aminés et des dérivés d'hydroquinone.

5. Moulage thermoplastique intumescent selon la revendication 1, dans lequel le mélange de polymère chloré thermoplastique élastomère moulable est principalement constitué de 25 à 74% en poids d'élastomère de polyéthylène chloré, le restant étant constitué d'au moins de l'un d'un poly(chlorure de vinyle) et d'un polyéthylène à haute densité ; dans lequel le stabilisant à la chaleur est présent dans la préparation mélangée dans une proportion d'environ 5 à 15% en poids du total du stabilisant à la chaleur et du mélange polymère chloré moulable, et dans lequel l'additif intumescent est présent dans la préparation mélangée dans une proportion d'environ 25 à 40% en poids du total de l'additif intumescent et du mélange polymère chloré moulable.

6. Moulage thermoplastique intumescent selon la revendication 5, dans lequel le mélange de polymère chloré thermoplastique élastomère moulable est un élastomère de polyéthylène chloré thermoplastique moulable.
